# EUROPÄISCHE PATENTSCHRIFT

(11) **EP 4 565 522 B1**
(45) Veröffentlichungstag und Bekanntmachung des Hinweises auf die Patenterteilung: **18.11.2026**
(21) Anmeldenummer: 23748057.9
(22) Anmeldetag: 25.07.2023
(51) Int. Cl.: B65H 19/10, B65H 19/18, B65H 35/04, H01M 10/04

(54) **VORRICHTUNG UND VERFAHREN ZUM VERBINDEN VON ENDLICHEN MATERIALBAHNEN**
DEVICE AND METHOD FOR CONNECTING CONTINUOUS MATERIAL WEBS
DISPOSITIF ET PROCÉDÉ DE RACCORDEMENT DE BANDES DE MATÉRIAU CONTINUES

(30) Priorität: 01.08.2022 DE 102022119215
(43) Veröffentlichungstag der Anmeldung: 11.06.2025
(73) Patentinhaber: Körber Technologies GmbH, 21033 Hamburg (DE)
(72) Erfinder: HORN, Matthias, 22926 Ahrensburg (DE); BUSCH, Karl Richard, 22081 Hamburg (DE); HAUL, Michael, 21529 Kröppelshagen (DE); HENNING, Axel, 22113 Oststeinbek (DE)
(74) Vertreter: Müller Verweyen
(86) Internationale Anmeldenummer: PCT/EP2023/070602
(87) Internationale Veröffentlichungsnummer: WO 2024/028167

(56) Entgegenhaltungen:
- KR-A- 20180 069 391
- US-A- 5 639 338

## Beschreibung

Die vorliegende Erfindung betrifft eine Vorrichtung zum Verbinden von endlichen Materialbahnen für die Energiezellen produzierende Industrie sowie ein Verfahren zum Verbinden von endlichen Materialbahnen für die Energiezellen produzierende Industrie.

Energiezellen oder auch Energiespeicher im Sinne der Erfindung werden z.B. in Kraftfahrzeugen, sonstigen Landfahrzeugen, Schiffen, Flugzeugen oder auch in stationären Anlagen, wie z.B. in Form von Batteriezellen oder Brennstoffzellen verwendet, bei denen sehr große Energiemengen über größere Zeiträume gespeichert werden müssen. Dazu weisen solche Energiezellen eine Struktur aus übereinander geschichteten Materialien auf, welche in der Regel aus einem Anodenmaterial auf einer Leiterfolie und einem Kathodenmaterial auf einer Leiterfolie und einer Separatorfolie bestehen, wobei die Separatorfolie zwischen dem Anodenmaterial und dem Kathodenmaterial angeordnet ist. Ein solcher Materialverbund kann in einer Energiezelle in einer gestapelten, gerollten oder gefalteten Anordnung vorliegen.

Für eine hohe Produktionsgeschwindigkeit werden die Materialien für Anode, Kathode und Separator soweit möglich als Materialbahnen verarbeitet. Hierbei werden die Materialbahnen, welche beispielsweise Halbzeuge oder auch Zwischenprodukte sein können, in der Regel als Bobine oder Coil geliefert oder in dieser Form zwischen unterschiedlichen Anlagen transportiert. Bobinen weisen zwangsläufig eine begrenzte Bahnlänge auf. Für eine möglichst hohe Produktionsrate und somit auch für geringe Produktionskosten ist eine kontinuierliche Produktion mit hoher Geschwindigkeit mit einer Endlosbahn vorteilhaft, so dass jeweils ablaufende Materialbahnen mit neuen Materialbahnen verbunden werden. Für die Sicherstellung einer kontinuierlichen Produktion sind Prozessspeicher oder auch Pufferspeicher bekannt, welche einen Puffer darstellen, so dass die Verbindung von zwei Materialbahnen zum Erreichen einer Endlosbahn hergestellt werden kann, während der weitere Produktionsprozess mit der Materialbahn aus dem Pufferspeicher betrieben wird. Steigende Produktionsgeschwindigkeiten bei der Herstellung von Energiezellen, beispielsweise Li-Ionen Batterien, können jedoch nicht durch immer größere Pufferspeicher kompensiert werden, so dass der Verbindungsprozess möglichst schnell ausgeführt werden muss.

Weiterhin können die Verbindungsteilen zwischen zwei Materialbahnen in der Endlosbahn im weiteren Prozessverlauf problematisch sein, so dass die Verbindungsstellen möglichst wenig von den weiteren Teilen der Materialbahn abweichen sollen.

Aus der KR 2018 0069391 A ist beispielsweise eine Vorrichtung zum Verbinden von Materialien für eine Batterie bekannt, die in der Lage ist, ein neues Material mit einem alten Material zu verbinden. Die Vorrichtung umfasst einen ersten Materialzufuhrteil, der ein erstes Material zuführt, und einen zweiten Materialzufuhrteil, der ein zweites Material zuführt. Die Vorrichtung umfasst einen Klebebandteil, der die Enden des ersten und des zweiten Materials verbindet.

Es ist daher die Aufgabe der Erfindung, eine Vorrichtung und ein Verfahren anzugeben, welche eine möglichst schnelle und effiziente Verbindung von Materialbahnen zu einer Endlosbahn ermöglichen.

Die Aufgabe wird durch die Merkmale der unabhängigen Ansprüche gelöst. Weitere bevorzugte Ausführungsformen der Erfindung sind den Unteransprüchen, den Figuren und der dazugehörigen Beschreibung zu entnehmen.

Es wird eine Vorrichtung zum Verbinden von endlichen Materialbahnen für die Energiezellen produzierende Industrie vorgeschlagen, wobei eine ablaufende Materialbahn in einem ersten Führungsabschnitt und eine neue Materialbahn in einem zweiten Führungsabschnitt führbar sind. Die ablaufende Materialbahn und die neue Materialbahn sind in einer Förderrichtung förderbar. Die Vorrichtung umfasst eine Haltevorrichtung, welche dazu eingerichtet ist, die neue Materialbahn mittels Unterdrucks im zweiten Führungsabschnitt zu halten. Die Vorrichtung umfasst weiter ein Gegenelement und ein Schneidelement in Förderrichtung hinter der Haltevorrichtung, wobei das Gegenelement und das Schneidelement dazu eingerichtet sind, die stehende neue Materialbahn unter Herstellung eines neuen Bahnanfangs der neuen Materialbahn zu schneiden. Ferner umfasst die Vorrichtung einen Applikator zur Applikation eines Klebestreifens am neuen Bahnanfang der neuen Materialbahn, und einen Stempel und eine Schneidvorrichtung. Die Schneidvorrichtung ist dazu eingerichtet, die stehende ablaufende Materialbahn unter Herstellung eines neuen Bahnendes der ablaufenden Materialbahn zu schneiden. Der Stempel ist dazu eingerichtet, das Bahnende der ablaufenden Materialbahn auf den Klebestreifen und gegen den Applikator zu drücken, um den neuen Bahnanfang der neuen Materialbahn mit dem neuen Bahnende der ablaufenden Materialbahn zu verbinden.

Mit der vorgeschlagenen Vorrichtung kann schnell eine hochwertige Verbindung zwischen einer ablaufenden und einer neuen Materialbahn hergestellt werden, so dass der Produktionsprozess nur minimal unterbrochen werden muss.

Vorzugsweise weist die Vorrichtungen einen Pufferspeicher oder Prozessspeicher für die ablaufendende Materialbahn auf.

Aufgrund der kurzen Unterbrechung der Förderung der endlosen Materialbahn bei der Herstellung der Verbindung kann der Pufferspeicher kleiner ausgelegt und/oder die Fördergeschwindigkeit der endlosen Materialbahn erhöht und somit auch die Produktionsgeschwindigkeit für die Herstellung von Energiezelle erhöht werden.

Die vorgeschlagene Vorrichtung eignet sich für die Herstellung eines sogenannten statischen Spleißes, bei dem die Fördergeschwindigkeit bei der Herstellung der Verbindung durch den Klebestreifen zwischenzeitlich auf Null abgesenkt wird.

Weiterhin ermöglicht die Vorrichtung eine Verbindung der ablaufenden Materialbahn mit den neuen Materialbahn auf Stoß, so dass keine Überlappung der beiden Materialbahnen an der Verbindungsstelle vorliegt. Daher können Störungen im weiteren Herstellungsprozess der Energiezellen durch die Vermeidung der Verdopplung der Materialstärke durch eine Überlappung der Materialbahnen verhindert werden. Der Materialauftrag durch den Klebestreifen ist dahingehend vergleichsweise gering. Die Vorrichtung eignet sich insbesondere für vergleichsweise Dicke Materialbahnen einer Energiezelle, beispielsweise eine mit Anoden- oder Kathodenmaterial beschichtete Leiterfolie.

Der Klebestreifen wird vorzugsweise auf die unbeschichtete Seite der mit Anoden- oder Kathodenmaterial beschichteten Leiterfolie aufgeklebt. Ferner werden die ablaufende Materialbahn und neue Materialbahn im ersten und zweiten Führungsabschnitte vor der Verbindung weitgehend parallel geführt.

In vorteilhaften Ausführungsformen übernimmt der Applikator den Klebestreifen von einer Bereitstellungseinheit. Weiterhin ist der Applikator vorzugsweise schwenkbar oder an einem Schwenkelement angeordnet. Der Klebestreifen kann am Applikator beispielsweise mittels Unterdrucks von der Bereitstellungseinheit abgenommen und bis zur Applikation auf den neuen Bahnanfang der neuen Materialbahn und ggf. auch bis zur Applikation auf das neue Bahnende der ablaufenden Materialbahn gehalten werden.

Das neue Bahnende der ablaufenden Materialbahn ist das Ende der ablaufenden Materialbahn, welches weiter in Förderrichtung in der Vorrichtung gefördert wird und mit dem neuen Bahnanfang der neuen Materialbahn verbunden wird. Das ursprüngliche Ende der ablaufenden Materialbahn ist in der Regel der Bobine zugeordnet, auf der der Rest der Materialbahn bis zum Schnitt der ablaufenden Materialbahn verbleibt. Der Bobine mit dem Reststück der ablaufenden Materialbahn kann anschließend entnommen werden. Dementsprechend wird nach der Verbindung der ablaufenden Materialbahn mit der neuen Materialbahn die neue Materialbahn zu einer ablaufenden Materialbahn, so dass eine endlose Materialbahn in der Vorrichtung herstellbar ist.

Das Gegenelement ist in einer bevorzugten Ausführungsform zur Anlage an die neue Materialbahn bewegbar. Das Gegenelement wird hierbei vorzugsweise in die Ebene des Führungsabschnitts der neuen Materialbahn, beispielsweise aus einer Rückwand der Vorrichtung, hereingeschwenkt. Dies erleichtert insbesondere das Auflegen oder Vorbereiten der neuen Materialbahn. Ferner können unnötige Kollisionen auf diese Weise vermieden werden. Das Gegenelement ist vorzugsweise zur Anlage an die neue Materialbahn auf der gegenüberliegenden Seite der Haltevorrichtung vorgesehen.

Vorzugsweise ist das Gegenelement zwischen der ablaufenden Materialbahn und der neuen Materialbahn angeordnet oder anordenbar. Das Gegenelement ist daher vorzugsweise zwischen den ersten Führungsabschnitt der ablaufenden Materialbahn und den zweiten Führungsabschnitt die neue Materialbahn bewegbar oder in diesem fest angeordnet.

In einer möglichen alternativen Ausführungsform ist das Schneidelement zwischen dem zweiten Führungsabschnitt der neuen Materialbahn und dem ersten Führungsabschnitt der ablaufenden Materialbahn angeordnet oder in eine solche Anordnung verschiebbar und/oder verschwenkbar. Das Gegenelement ist in dieser möglichen alternativen Ausführungsform auf der anderen Seite der neuen Materialbahn angeordnet.

Gemäß einer Weiterentwicklung wird vorgeschlagen, dass das Gegenelement als Widerlager für den Applikator zur Applikation des Klebestreifens am neuen Bahnanfang der neuen Materialbahn vorgesehen ist.

Das Gegenelement kann daher in möglichen Ausführungsformen neben der Funktion als Gegenhalter für das Schneiden der neuen Materialbahn auch als Gegenhalter für die Applikation des Klebestreifens auf die neue Materialbahn dienen. Durch die Integration beider Funktionen kann die Vorrichtung vergleichsweise einfach gehalten werden.

Gemäß einer weiteren Weiterentwicklung wird vorgeschlagen, dass das Gegenelement und die Schneidvorrichtung dazu eingerichtet sind, die ablaufende Materialbahn zu schneiden. Das Gegenelement kann daher in vorteilhaften Ausführungsformen weitere Funktionen übernehmen, wobei der Schnitt der ablaufenden Materialbahn mit der Schneidvorrichtung vorzugsweise gegen eine andere Kante des Gegenelements im Vergleich zum Schneiden der neuen Materialbahn durch das Schneidelement erfolgt. In möglichen Ausführungsformen können jedoch beide Schnitte an unterschiedlichen Kanten der gleichen Fläche des Gegenelements erfolgen.

Vorzugsweise sind der Stempel und die Schneidvorrichtung miteinander fest verbunden oder die Schneidvorrichtung an Stempel angeordnet, so dass der Stempel gemeinsam mit der Schneidvorrichtung bewegt wird. Weiter vorzugsweise sind der Stempel und die Schneidvorrichtung axial in Richtung der ablaufenden Materialbahn verschiebbar. In bevorzugten Ausführungsformen kommt der Stempel bei der axialen Verschiebung von Stempel und Schneidvorrichtung, welche beispielsweise in Form eines Messers ausgeführt sein kann, vor der Schneidvorrichtung in Kontakt mit der ablaufenden Materialbahn. Es liegt daher vorzugsweise ein Überstand des Stempels gegenüber der Schneidvorrichtung vor. Es ist insbesondere vorteilhaft, wenn ein Abstand zwischen Stempel und Schneidvorrichtung vorgesehen ist. Weiterhin ist es bevorzugt, wenn der Stempel in Förderrichtung vor der Schneidvorrichtung angeordnet ist.

Gemäß einer bevorzugten Ausführungsform wird vorgeschlagen, dass die ablaufende Materialbahn in dem ersten Führungsabschnitt auf zwei Rollen geführt ist und/oder die neue Materialbahn in dem zweiten Führungsabschnitt auf zwei Rollen geführt ist. Vorzugsweise sind die neue und die ablaufende Materialbahn in diesem Abschnitt parallel führbar.

Gemäß einer Weiterentwicklung wird vorgeschlagen, dass eine Vorspanneinheit zum Aufrollen und Spannen des Bahnanfangs der neuen Materialbahn vorgesehen ist. Somit kann die neue Materialbahn im zweiten Führungsabschnitt, insbesondere zwischen den Rollen, soweit gespannt werden, dass eine gute Führung und eindeutige Lage der neuen Materialbahn im zweiten Führungsabschnitt erreicht werden können. Dies verbessert insbesondere die Schnittqualität des Schnitts durch das Schneidelement gegen das Gegenelement.

Gemäß einer weiteren Weiterentwicklung wird vorgeschlagen, dass ein Bobinenöffner vorgesehen ist, welcher dazu eingerichtet ist, den Bahnanfang der neuen Materialbahn von einer Bobine aufzunehmen, durch den zweiten Führungsabschnitt zu führen und an das Vorspannelement zu übergeben.

Hierdurch kann ein hoher Automatisierungsgrad erreicht werden, wodurch die Fördergeschwindigkeit der ablaufenden Materialbahn während dieser Vorbereitungsschritte nicht reduziert oder gar gestoppt werden muss. Der Bobinenöffner ist vorzugsweise schwenkbar oder an einem Schwenkelement angeordnet und weist vorzugsweise die gleiche Drehachse wie der Applikator auf.

Der Bahnanfang der neuen Materialbahn entspricht in der Regel dem äußeren Ende einer neuen Materialbahn auf einer Bobine. Die neue Materialbahn wird in der Vorrichtung unter Herstellung eines neuen Bahnanfangs geschnitten. Der am Vorlauf anliegende Abschnitt mit dem ursprünglichen Bahnanfang der neuen Materialbahn wird daher nicht in Förderrichtung gefördert und bildet einen Rest.

Weiterhin wird zur Lösung der Aufgabe ein Verfahren zum Verbinden von endlichen Materialbahnen für die Energiezellen produzierende Industrie mit einer Vorrichtung nach einem der Ansprüche 1 bis 9 mit den folgenden Schritten vorgeschlagen:
- Fördern einer ablaufenden Materialbahn im ersten Führungsabschnitt in die Förderrichtung;
- Halten der neuen Materialbahn im zweiten Führungsabschnitt mittels Unterdrucks durch die Haltevorrichtung;
- Schneiden der neuen Materialbahn in Förderrichtung hinter der Haltevorrichtung mittels des Gegenelements und des Schneidelements und Herstellen eines neuen Bahnanfangs der neuen Materialbahn;
- Applizieren eines Klebestreifens am neuen Bahnanfang der neuen Materialbahn mittels des Applikators;
- Anhalten der ablaufenden Materialbahn im ersten Führungsabschnitt;
- Schneiden der ablaufenden Materialbahn und Herstellen eines neuen Bahnendes der ablaufenden Materialbahn mittels der Schneidvorrichtung;
- Drücken des Bahnendes der ablaufenden Materialbahn mittels des Stempels auf den Klebestreifen und gegen den Applikator und Verbinden des neuen Bahnanfangs der neuen Materialbahn mit dem neuen Bahnende der ablaufenden Materialbahn;
- Fördern der neuen Materialbahn.

Das vorgeschlagene Verfahren ermöglicht eine schnelle und automatisierte Verbindung von zwei endlichen Materialbahnen für die Herstellung von Energiezellen, insbesondere Batteriezellen.

Gemäß einer Weiterentwicklung des Verfahrens mit einer Vorrichtung nach Anspruch 8 oder 9 werden folgende Schritte vor dem Halten der neuen Materialbahn durch die Haltevorrichtung vorgeschlagen:
- Greifen des Bahnanfangs der neuen Materialbahn von einer Bobine;
- Führen der neuen Materialbahn durch den zweiten Führungsabschnitt;
- Übergeben des Bahnanfangs der neuen Materialbahn an die Vorspanneinheit und Spannen der neuen Materialbahn im zweiten Führungsabschnitt.

Hierdurch kann der gesamte Verbindungsprozess nach dem Auflegen einer neuen Bobine mit einer neuen Materialbahn automatisiert werden.

Die Erfindung wird im Folgenden anhand bevorzugter Ausführungsformen unter Bezugnahme auf die beigefügten Figuren erläutert.

Dabei zeigt
- Fig. 1 - 5: eine Vorrichtung zum Verbinden von endlichen Materialbahnen in verschiedenen Betriebszuständen vor dem Verbinden der Materialbahnen;
- Fig. 6: zwei mit einem Klebestreifen verbundene Materialbahnen von einer Vorderseite;
- Fig. 7: zwei mit einem Klebestreifen verbundene Materialbahnen von einer Rückseite;
- Fig. 8 - 13: Detailansichten einer Vorrichtung zum Verbinden von zwei Materialbahnen in verschiedenen Betriebszuständen beim Verbinden.

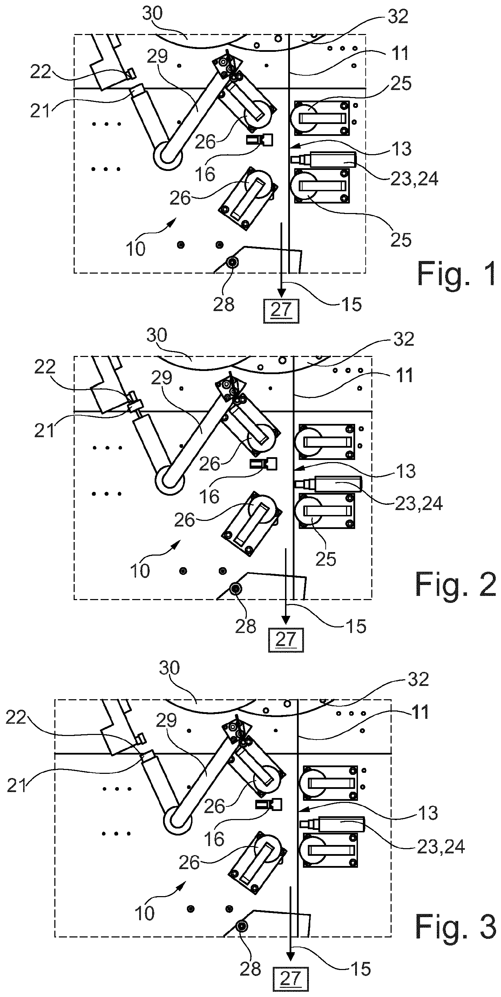

In den Figuren 1 bis 5 ist eine Vorrichtung 10 zum Verbinden von endlichen Materialbahnen 11, 12 für die Energiezellen, insbesondere Batteriezellen, produzierende Industrie gezeigt. Eine Materialbahn 11 wird von einer Bobine 30 abgerollt und über einen ersten Führungsabschnitt 13 über einen Pufferspeicher 27 für die Materialbahn 11 weiteren Produktionsschritten im abgerollten Zustand zugeführt. Die Materialbahn 11 wird von einer Bobine 30 zugeführt, so dass es sich bei der Materialbahn 11 um eine endliche Materialbahn 11 handelt. Weiterhin handelt es sich bei der Materialbahn 11, welche dem Pufferspeicher 27 oder weiteren Prozessschritten für die Herstellung von Energiezellen zugeführt wird, um eine ablaufende Materialbahn 11. Für die Herstellung einer endlosen Materialbahn 11, 12 wird die ablaufende Materialbahn 11 jeweils mit einer neuen Materialbahn 12 durch die Vorrichtung 10 verbunden. Die neue Materialbahn 12 wird von einer neuen Bobine 30 gefördert, die mit der Bobine 30 der ablaufenden Materialbahn 12 auf einen Drehteller 32 der Vorrichtung 10 aufgesetzt wird. Die ablaufende Materialbahn 11 wird durch einen ersten Führungsabschnitt 13, welcher in diesem Ausführungsbeispiel durch zwei Rollen 25 gebildet ist, in der Förderrichtung 15 zu einem Pufferspeicher 27 gefördert. Der Pufferspeicher 27 ermöglicht es, die ablaufende Materialbahn 11 im Bereich des ersten Führungsabschnitts 13 kurzzeitig anzuhalten und gleichzeitig die ablaufende Materialbahn 11 nachfolgenden Prozessen für die Herstellung von Energiezellen kontinuierlich zur Verfügung zu stellen.

Figur 1 zeigt die Vorrichtung 10 in einem Betriebszustand, in dem eine neue Bobine 30 mit einer neuen Materialbahn 12 auf dem Drehteller 32 aufgelegt ist. Ein Applikator 21, welcher als Schwenkarm ausgeführt ist, wird zunächst in einer Übernahmeposition gegenüber einer Bereitstellungseinheit 33 für Klebestreifen 22 bewegt.

In Figur 2 ist der Applikator 21 zur Bereitstellungseinheit 33 verlagert, wodurch ein Klebestreifen 22 für das Verbinden der ablaufenden Materialbahn 11 mit der neuen Materialbahn 12 von dem Applikator 22 übernommen werden kann, welcher beispielsweise mittels Unterdrucks fixierbar ist. Der Applikator 21 mit dem Klebestreifen 22 ist anschließend für das Verbinden der ablaufenden Materialbahn 11 mit der neuen Materialbahn 12 in einer Warteposition, siehe Figur 3, verfügbar.

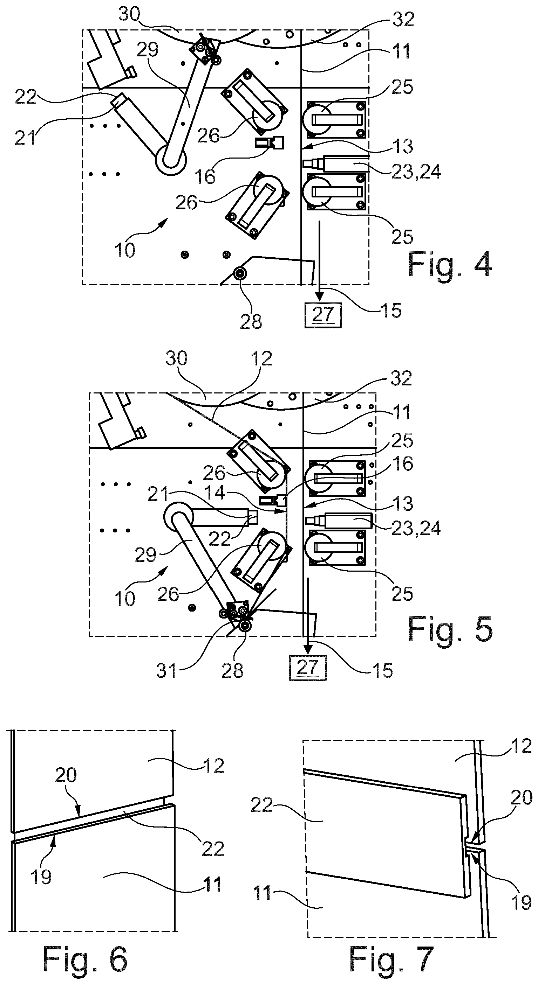

Die Figuren 4 und 5 zeigen weitere Vorbereitungsschritte für das Verbinden der ablaufenden Materialbahn 11 mit der neuen Materialbahn 12. Ein Bobinenöffner 29, welcher in diesem vorteilhaften Ausführungsbeispiel mit dem Applikator 21 eine gemeinsame Drehachse aufweist, öffnet hierzu die Bobine 30 mit der neuen Materialbahn 12, was in Figur 4 illustriert ist. Der Bobinenöffner 29 greift den Bahnanfang 31 der neuen Materialbahn 12 und führt die neue Materialbahn 12 durch den zweiten Führungsabschnitt 14, der in diesem vorteilhaften Ausführungsbeispiel durch zwei Rollen 26 gebildet wird, zu einer Vorspanneinheit 28. Die Vorspanneinheit 28 dient zur Spannung der neuen Materialbahn 12, so dass diese im zweiten Führungsabschnitt 13 auf den Rollen 26 definiert und gespannt anliegt, siehe Figur 5. Weiterhin kann mittels der Vorspanneinheit 28 beispielsweise Umhüllungspapier oder allgemein eine erste Lage der Bobine 30 aufgewickelt und entsorgt werden.

Während der in den Figuren 1 bis 5 dargestellten Schritte und Betriebszuständen der Vorrichtung 10 kann die ablaufende Materialbahn 11 weiterhin dem Pufferspeicher 27 zugeführt werden.

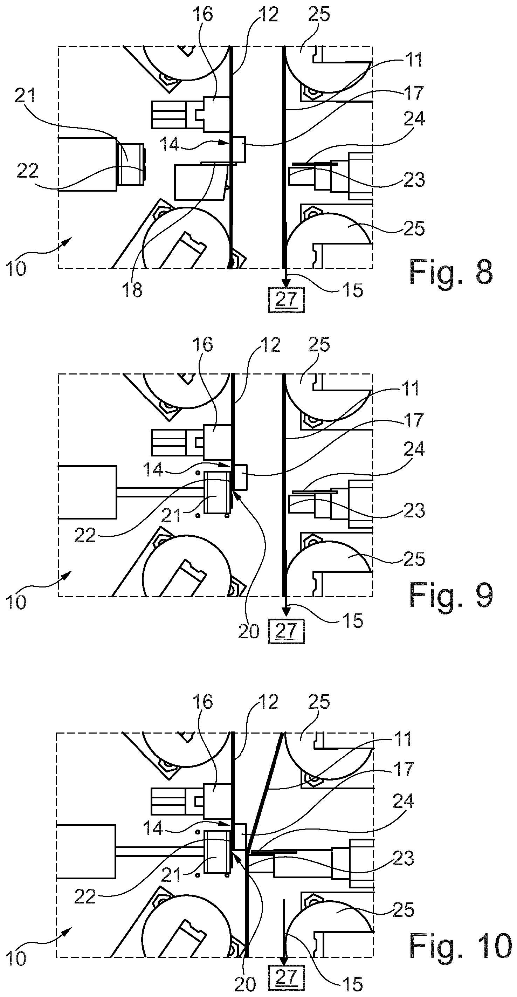

In den Figuren 6 und 7 ist eine Verbindung einer ablaufenden Materialbahn 11 mit einer neuen Materialbahn 12, welcher mit einer Vorrichtung 10 hergestellt wurde, in Detailansichten von der Vorder- und Rückseite der Materialbahn 11, 12 gezeigt. Die ablaufende Materialbahn 11 ist mit der neuen Materialbahn 12 auf Stoß, d.h. ohne Überlappung verbunden. Der Klebestreifen 22 ist sowohl auf die ablaufende Materialbahn 11 als auch auf die neue Materialbahn 12 geklebt und verbindet die Materialbahnen 11, 12 daher, wodurch eine endlose Materialbahn 11, 12 herstellbar ist. Die Verbindung an der ablaufenden Materialbahn 12 erfolgt an einem neuen Bahnende 19, welches nicht dem ursprünglichen Bahnende der ablaufenden Materialbahn 11 auf der Bobine 30 entspricht. Weiterhin erfolgt die Verbindung an der neuen Materialbahn 12 an einem neuen Bahnanfang 20, welcher nicht dem ursprünglichen Bahnanfang 31 auf der Bobine 30 mit der neuen Materialbahn 12 entspricht, was anhand der weiteren Figuren 8 bis 13 erläutert wird, welche den Verbindungsprozess mit der Vorrichtung 10 in einer Detailansicht der Vorrichtung 10 zeigen.

Figur 8 zeigt die Vorrichtung 10 in einem Zustand nach den Vorbereitungen entsprechend der Figuren 1 bis 5. Dementsprechend kann die ablaufenden Materialbahn 11 weiterhin in der Förderrichtung 15 gefördert werden. Eine Haltevorrichtung 16 liegt in dem zweiten Führungsabschnitt 14 an der neuen Materialbahn 12 an und hält diese mittels Unterdrucks. In Förderrichtung 15 hinter der Haltevorrichtung 16 werden in diesem vorteilhaften Ausführungsbeispiel ein Gegenelement 17 und ein Schneidelement 18 aus der Rückwand der Vorrichtung 10 ausgeklappt. Das Gegenelement 17 kommt in diesem Ausführungsbeispiel im Vergleich zur Haltevorrichtung 16 auf der anderen Seite der neuen Materialbahn 12 zur Anlage an die neue Materialbahn 12. Das Schneidelement 18 ist auf der gleichen Seite der neuen Materialbahn 12 wie die Haltevorrichtung 16 angeordnet. Das Schneidelement 18 trennt die neue Materialbahn 12 in Zusammenspiel mit dem Gegenelement 17, wodurch ein neuer Bahnanfang 20 der neuen Materialbahn 12 gebildet wird. Der abgetrennte Vorspann der neuen Materialbahn 12 kann von der Vorspanneinheit 28 aufgewickelt und anschließend entsorgt werden kann. Der neue Bahnanfang 20 wird durch die Haltevorrichtung 16 in Position gehalten und das Schneidelement 18 in diesem vorteilhaften Ausführungsbeispiel in die Rückwand der Vorrichtung 10 zurückgeklappt.

Wie in Figur 9 zu erkennen ist, verbleibt das Gegenelement 17 im Gegensatz zum Schneidelement 18 zunächst in Position. Der Applikator 21, an dem der Klebestreifen 22 gehalten ist, appliziert einen Teil des Klebestreifens 22 auf die neue Materialbahn 12 am neuen Bahnanfang 20, wobei das Gegenelement 17 als Gegenlager für den Applikator 21 zum Anpressen des Klebestreifens 22 auf die neue Materialbahn 12 dient. Der weitere Teil des Klebestreifens 22 liegt mit der klebenden Seite in Förderrichtung 15 hinter dem neuen Bahnanfang 20 der neuen Materialbahn 12 frei. Die nicht klebende Rückseite wird vorzugsweise weiterhin von dem Applikator 21 gehalten.

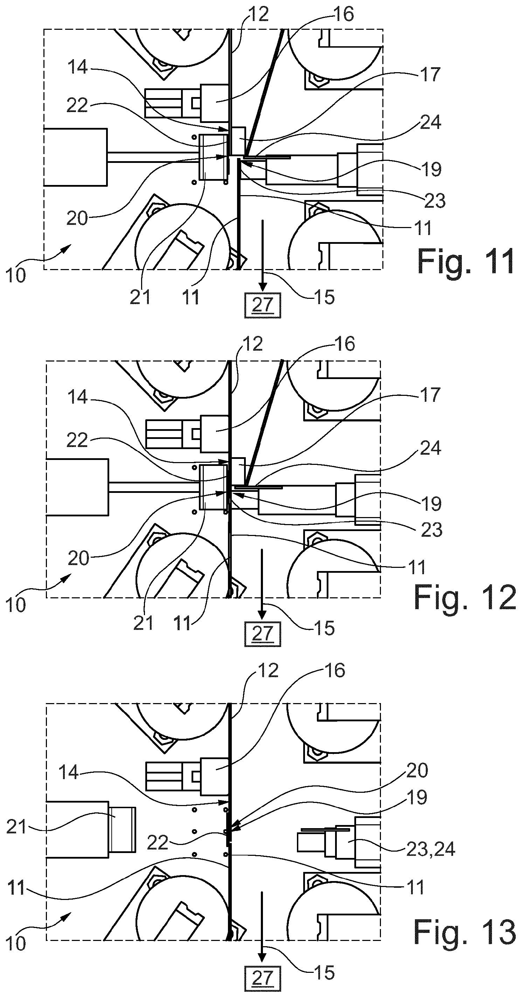

In Figur 10 ist die Vorrichtung 10 beim Verbindungsprozess gezeigt, bei dem die ablaufende Materialbahn 11 angehalten wurde und steht. Dementsprechend können nachfolgende Prozesse zur Herstellung von Energiezellen aus dem Pufferspeicher 27 versorgt werden. Die ablaufende Materialbahn 11 wird im ersten Führungsabschnitt von einem Stempel 23 in Richtung der neuen Materialbahn 12 ausgelenkt. Der Stempel 23 ist hierbei in Förderrichtung 15 hinter dem Gegenelement 17 angeordnet. Der Stempel 23 ist mit einer Schneidvorrichtung 24 versehen, welche in Bezug zur Förderrichtung 15 zwischen dem Stempel 23 und dem Gegenelement 17 angeordnet ist. Die Schneidvorrichtung 24 ist hierbei gegenüber dem Stempel 23 zurückversetzt, so dass bei der Verlagerung der ablaufenden Materialbahn 11 zunächst nur der Stempel 23 in Kontakt mit der ablaufenden Materialbahn 11 kommt. Mit fortschreitender Verlagerung gelangt die ablaufende Materialbahn 11, wie in Figur 11 zu erkennen, in Kontakt mit dem Gegenelement 17. Bei der weiteren Bewegung des Stempels 23 mit Schneidvorrichtung 24 trennt die Schneidvorrichtung 24 in Zusammenspiel mit dem Gegenelement 17 die ablaufende Materialbahn 12 unter Bildung eines neuen Bahnendes 19.

In Figur 12 ist dargestellt, wie der Stempel 23 das neue Bahnende 19 im Anschluss des Trennvorgangs auf den freien Teil des Klebestreifens 22 drückt, wobei der Applikator 22 die Rückseite des Klebestreifens 22 stützt. Die ablaufende Materialbahn 11 ist mit der neuen Materialbahn 12 über den Klebestreifen 22 verbunden.

Figur 13 zeigt die Vorrichtung 10 in einem nachfolgenden Schritt. Der Stempel 23 mit der Schneidvorrichtung 24 ist wieder in die Ausgangsposition zurückgezogen und das Gegenelement 17 wieder in die Rückwand der Vorrichtung 10 zurückgeklappt. Der Applikator 21 ist von dem Klebestreifen 22 getrennt und zurückverlagert. Die Haltevorrichtung 16 ist nicht mit Unterdruck beaufschlagt. Ferner wurde der Rest der ablaufenden Materialbahn 11 auf die Bobinen 30 zurück aufgewickelt. Dementsprechend kann die verbundene Materialbahn 11, 12 wieder mit der Prozessgeschwindigkeit in die Förderrichtung 15 gefördert werden. Die verbundene Materialbahn 11, 12 kann weiterhin zeitweise mit Übergeschwindigkeit in der Förderrichtung gefördert werden, um den Pufferspeicher 27 wieder zu aufzufüllen. Der Drehteller 32 mit den Bobinen 30 kann zudem derart gedreht werden, so dass die neue Materialbahn 12 nach der Verbindung den Verlauf der ablaufenden Materialbahn 11 übernimmt und in dem ersten Führungsabschnitt auf den Rollen 26 geführt ist.

### Bezugszeichenliste:

- 10: Vorrichtung
- 11: ablaufenden Materialbahn
- 12: neue Materialbahn
- 13: erster Führungsabschnitt
- 14: zweiter Führungsabschnitt
- 15: Förderrichtung
- 16: Haltevorrichtung
- 17: Gegenelement
- 18: Schneidelement
- 19: neues Bahnende
- 20: neuer Bahnanfang
- 21: Applikator
- 22: Klebestreifen
- 23: Stempel
- 24: Schneidvorrichtung
- 25: Rolle
- 26: Rolle
- 27: Pufferspeicher
- 28: Vorspanneinheit
- 29: Bobinenöffner
- 30: Bobine
- 31: Bahnanfangs
- 32: Drehteller
- 33: Bereitstellungseinheit

## Patentansprüche

1. Vorrichtung (10) zum Verbinden von endlichen Materialbahnen (11, 12) für die Energiezellen produzierende Industrie, wobei
- eine ablaufende Materialbahn (11) in einem ersten Führungsabschnitt (13) und eine neue Materialbahn (12) in einem zweiten Führungsabschnitt (14) führbar sind, wobei
- die ablaufende Materialbahn (11) und die neue Materialbahn (12) in einer Förderrichtung (15) förderbar sind, und die Vorrichtung (10)
- eine Haltevorrichtung (16), welche dazu eingerichtet ist, die neue Materialbahn (12) mittels Unterdrucks im zweiten Führungsabschnitt (14) zu halten,
- ein Gegenelement (17) und ein Schneidelement (18) in Förderrichtung (15) hinter der Haltevorrichtung (16), wobei das Gegenelement (17) und das Schneidelement (18) dazu eingerichtet sind, die stehende neue Materialbahn (12) unter Herstellung eines neuen Bahnanfangs (20) der neuen Materialbahn (12) zu schneiden,
- einen Applikator (21) zur Applikation eines Klebestreifens (22) am neuen Bahnanfang (20) der neuen Materialbahn (12), und
- einen Stempel (23) und eine Schneidvorrichtung (24) umfasst, wobei die Schneidvorrichtung (24) dazu eingerichtet ist, die stehende ablaufende Materialbahn (11) unter Herstellung eines neuen Bahnendes (19) der ablaufenden Materialbahn (11) zu schneiden, und wobei
- der Stempel (23) dazu eingerichtet ist, das Bahnende (19) der ablaufenden Materialbahn (11) auf den Klebestreifen (22) und gegen den Applikator (21) zu drücken, um den neuen Bahnanfang (20) der neuen Materialbahn (12) mit dem neuen Bahnende (19) der ablaufenden Materialbahn (11) zu verbinden.

2. Vorrichtung (10) nach Anspruch 1, **dadurch gekennzeichnet, dass** das Gegenelement (17) zur Anlage an die neue Materialbahn (12) bewegbar ist.

3. Vorrichtung (10) nach Anspruch 1 oder 2, **dadurch gekennzeichnet, dass** das Gegenelement (17) zwischen der ablaufenden Materialbahn (11) und der neuen Materialbahn (12) angeordnet oder anordenbar ist.

4. Vorrichtung (10) nach einem der vorangehenden Ansprüche, **dadurch gekennzeichnet, dass** das Gegenelement (17) als Widerlager für den Applikator (21) zur Applikation des Klebestreifens (22) am neuen Bahnanfang (20) der neuen Materialbahn (12) vorgesehen ist.

5. Vorrichtung (10) nach einem der vorangehenden Ansprüche, **dadurch gekennzeichnet, dass** das Gegenelement (17) und die Schneidvorrichtung (24) dazu eingerichtet sind, die ablaufende Materialbahn (11) zu schneiden.

6. Vorrichtung (10) nach einem der vorangehenden Ansprüche, **dadurch gekennzeichnet, dass** die ablaufende Materialbahn (11) in dem ersten Führungsabschnitt (13) auf zwei Rollen (25) geführt ist und/oder die neue Materialbahn (12) in dem zweiten Führungsabschnitt (14) auf zwei Rollen (26) geführt ist.

7. Vorrichtung (10) nach einem der vorangehenden Ansprüche, **dadurch gekennzeichnet, dass** ein Pufferspeicher (27) für die ablaufendende Materialbahn (11) vorgesehen ist.

8. Vorrichtung (10) nach einem der vorangehenden Ansprüche, **dadurch gekennzeichnet, dass** eine Vorspanneinheit (28) zum Aufrollen und Spannen des Bahnanfangs (31) der neuen Materialbahn (12) vorgesehen ist.

9. Vorrichtung (10) nach Anspruch 8, **dadurch gekennzeichnet, dass** ein Bobinenöffner (29) vorgesehen ist, welcher dazu eingerichtet ist, den Bahnanfang (31) der neuen Materialbahn (12) von einer Bobine (30) aufzunehmen, durch den zweiten Führungsabschnitt (14) zu führen und an die Vorspanneinheit (28) zu übergeben.

10. Verfahren zum Verbinden von endlichen Materialbahnen für die Energiezellen produzierende Industrie mit einer Vorrichtung (10) nach einem der vorangehenden Ansprüche, **gekennzeichnet durch** die folgenden Schritte:
- Fördern einer ablaufenden Materialbahn (11) im ersten Führungsabschnitt (13) in die Förderrichtung (15);
- Halten der neuen Materialbahn (12) im zweiten Führungsabschnitt (14) mittels Unterdrucks durch die Haltevorrichtung (16);
- Schneiden der neuen Materialbahn (12) in Förderrichtung (15) hinter der Haltevorrichtung (16) mittels des Gegenelements (17) und des Schneidelements (18) und Herstellen eines neuen Bahnanfangs (20) der neuen Materialbahn (12);
- Applizieren eines Klebestreifens (22) am neuen Bahnanfang (20) der neuen Materialbahn (12) mittels des Applikators (21);
- Anhalten der ablaufenden Materialbahn (11) im ersten Führungsabschnitt (13);
- Schneiden der ablaufenden Materialbahn (11) und Herstellen eines neuen Bahnendes (20) der ablaufenden Materialbahn (11) mittels der Schneidvorrichtung (24);
- Drücken des Bahnendes (19) der ablaufenden Materialbahn (11) mittels des Stempels (23) auf den Klebestreifen (22) und gegen den Applikator (21) und Verbinden des neuen Bahnanfangs (20) der neuen Materialbahn (12) mit dem neuen Bahnende (19) der ablaufenden Materialbahn (11);
- Fördern der neuen Materialbahn (12).

11. Verfahren nach Anspruch 10 mit einer Vorrichtung nach Anspruch 8 oder 9, **gekennzeichnet durch** die Schritte vor dem Halten der neuen Materialbahn (12) durch die Haltevorrichtung:
- Greifen des Bahnanfangs (31) der neuen Materialbahn (12) von einer Bobine (30);
- Führen der neuen Materialbahn (12) durch den zweiten Führungsabschnitt (14);
- Übergeben des Bahnanfangs (31) der neuen Materialbahn (12) an die Vorspanneinheit (28) und Spannen der neuen Materialbahn (12) im zweiten Führungsabschnitt (14).

## Claims

1. Device (10) for joining finite material webs (11, 12) for the energy cell manufacturing industry, wherein
- a running-out material web (11) can be guided in a first guide portion (13) and a new material web (12) can be guided in a second guide portion (14), wherein
- the running-out material web (11) and the new material web (12) can be conveyed in a conveying direction (15), and the device (10) comprises
- a holding device (16) which is designed to hold the new material web (12) in the second guide portion (14) by means of negative pressure,
- a counter element (17) and a cutting element (18) behind the holding device (16) in the conveying direction (15), wherein the counter element (17) and the cutting element (18) are designed to cut the stationary new material web (12) while producing a new web front end (20) of the new material web (12),
- an applicator (21) for applying an adhesive strip (22) to the new web front end (20) of the new material web (12), and
- a stamp (23) and a cutting device (24), wherein the cutting device (24) is designed to cut the stationary running-out material web (11) while producing a new web end (19) of the running-out material web (11), and wherein
- the stamp (23) is designed to press the web end (19) of the running-out material web (11) onto the adhesive strip (22) and against the applicator (21) in order to join the new web front end (20) of the new material web (12) to the new web end (19) of the running-out material web (11).

2. Device (10) according to claim 1, **characterized in that** the counter element (17) can be moved to rest on the new material web (12).

3. Device (10) according to claim 1 or 2, **characterized in that** the counter element (17) is arranged or can be arranged between the running-out material web (11) and the new material web (12).

4. Device (10) according to any of the preceding claims, **characterized in that** the counter element (17) is provided as an abutment for the applicator (21) for applying the adhesive strip (22) to the new web front end (20) of the new material web (12).

5. Device (10) according to any of the preceding claims, **characterized in that** the counter element (17) and the cutting device (24) are designed to cut the running-out material web (11).

6. Device (10) according to any of the preceding claims, **characterized in that** the running-out material web (11) is guided on two rollers (25) in the first guide portion (13) and/or the new material web (12) is guided on two rollers (26) in the second guide portion (14).

7. Device (10) according to any of the preceding claims, **characterized in that** a buffer (27) is provided for the running-out material web (11).

8. Device (10) according to any of the preceding claims, **characterized in that** a pretensioning unit (28) is provided for rolling up and tensioning the web front end (31) of the new material web (12).

9. Device (10) according to claim 8, **characterized in that** a bobbin opener (29) is provided which is designed to pick up the web front end (31) of the new material web (12) from a bobbin (30), guide the front end of the new material web through the second guide portion (14) and transfer the front end of the new material web to the pretensioning unit (28).

10. Method for joining finite material webs for the energy cell manufacturing industry by means of a device (10) according to any of the preceding claims, **characterized by** the following steps:
- conveying a running-out material web (11) in the first guide portion (13) in the conveying direction (15);
- holding, by the holding device (16) by means of negative pressure, the new material web (12) in the second guide portion (14);
- cutting the new material web (12), by means of the counter element (17) and the cutting element (18), behind the holding device (16) in the conveying direction (15) and producing a new web front end (20) of the new material web (12);
- applying, by means of the applicator (21), an adhesive strip (22) to the new web front end (20) of the new material web (12);
- stopping the running-out material web (11) in the first guide portion (13);
- cutting, by means of the cutting device (24), the running-out material web (11) and producing a new web end (20) of the running-out material web (11);
- pressing, by means of the stamp (23), the web end (19) of the running-out material web (11) onto the adhesive strip (22) and against the applicator (21) and joining the new web front end (20) of the new material web (12) to the new web end (19) of the running-out material web (11);
- conveying the new material web (12).

11. Method according to claim 10 using a device according to claim 8 or 9,
**characterized by** the steps prior to holding the new material web (12) by the holding device:
- gripping the web front end (31) of the new material web (12) from a bobbin (30);
- guiding the new material web (12) through the second guide portion (14);
- transferring the web front end (31) of the new material web (12) to the pretensioning unit (28) and tensioning the new material web (12) in the second guide portion (14).

## Revendications

1. Dispositif (10) destiné à raccorder des bandes de matériau finies (11, 12) pour l'industrie de fabrication de cellules énergétiques, dans lequel
- une bande de matériau défilante (11) peut être guidée dans une première section de guidage (13) et une nouvelle bande de matériau (12) dans une deuxième section de guidage (14),
- la bande de matériau défilante (11) et la nouvelle bande de matériau (12) peuvent être transportées dans une direction de transport (15), et le dispositif (10) présente
- un dispositif de maintien (16) qui est conçu pour maintenir la nouvelle bande de matériau (12) au moyen d'une dépression dans la deuxième section de guidage (14),
- un contre-élément (17) et un élément de coupe (18) situés en aval du dispositif de maintien (16) dans la direction de transport (15), le contre-élément (17) et l'élément de coupe (18) étant conçus pour couper la nouvelle bande de matériau (12) à l'arrêt en formant un nouveau début de bande (20) de la nouvelle bande de matériau (12),
- un applicateur (21) destiné à appliquer une bande adhésive (22) sur le nouveau début de bande (20) de la nouvelle bande de matériau (12), et
- un poinçon (23) et un dispositif de coupe (24), le dispositif de coupe (24) étant conçu pour couper la bande de matériau défilante (11) à l'arrêt en formant une nouvelle extrémité de bande (19) de la bande de matériau défilante (11), et dans lequel
- le poinçon (23) est conçu pour presser l'extrémité (19) de la bande de matériau défilante (11) sur la bande adhésive (22) et contre l'applicateur (21) afin de raccorder le nouveau début de bande (20) de la nouvelle bande de matériau (12) à la nouvelle extrémité de bande (19) de la bande de matériau défilante (11).

2. Dispositif (10) selon la revendication 1, **caractérisé en ce que** le contre-élément (17) peut être déplacé pour venir en appui contre la nouvelle bande de matériau (12).

3. Dispositif (10) selon les revendications 1 ou 2, **caractérisé en ce que** le contre-élément (17) est disposé ou peut être disposé entre la bande de matériau défilante (11) et la nouvelle bande de matériau (12).

4. Dispositif (10) selon l'une quelconque des revendications précédentes, **caractérisé en ce que** le contre-élément (17) est prévu pour servir de point d'appui à l'applicateur (21) lors de l'application de la bande adhésive (22) sur le nouveau début de bande (20) de la nouvelle bande de matériau (12).

5. Dispositif (10) selon l'une quelconque des revendications précédentes, **caractérisé en ce que** le contre-élément (17) et le dispositif de coupe (24) sont conçus pour couper la bande de matériau défilante (11).

6. Dispositif (10) selon l'une quelconque des revendications précédentes, **caractérisé en ce que** la bande de matériau défilante (11) est guidée dans la première section de guidage (13) sur deux rouleaux (25) et/ou la nouvelle bande de matériau (12) est guidée dans la deuxième section de guidage (14) sur deux rouleaux (26).

7. Dispositif (10) selon l'une quelconque des revendications précédentes, **caractérisé en ce qu'**un réservoir tampon (27) est prévu pour la bande de matériau défilante (11).

8. Dispositif (10) selon l'une quelconque des revendications précédentes, **caractérisé en ce qu'**une unité de précontrainte (28) est prévue pour enrouler et tendre le début de bande (31) de la nouvelle bande de matériau (12).

9. Dispositif (10) selon la revendication 8, **caractérisé en ce qu'**il est prévu un bobineur (29) qui est conçu pour recevoir le début de bande (31) de la nouvelle bande de matériau (12) à partir d'une bobine (30), le faire passer à travers la deuxième section de guidage (14) et le transférer à l'unité de précontrainte (28).

10. Procédé destiné à raccorder des bandes de matériau finies pour l'industrie de production de cellules énergétiques à l'aide d'un dispositif (10) selon l'une des revendications précédentes, **caractérisé par** les étapes suivantes :
- transport d'une bande de matériau défilante (11) dans la première section de guidage (13) dans la direction de transport (15) ;
- maintien de la nouvelle bande de matériau (12) dans la deuxième section de guidage (14) au moyen d'une dépression par le dispositif de maintien (16) ;
- coupe de la nouvelle bande de matériau (12) en aval du dispositif de maintien (16) dans la direction de transport (15) à l'aide du contre-élément (17) et de l'élément de coupe (18), et formation d'un nouveau début de bande (20) de la nouvelle bande de matériau (12) ;
- application d'une bande adhésive (22) sur le nouveau début de bande (20) de la nouvelle bande de matériau (12) au moyen de l'applicateur (21) ;
- arrêt de la bande de matériau défilante (11) dans la première section de guidage (13) ;
- coupe de la bande de matériau défilante (11) et formation d'une nouvelle extrémité de bande (20) de la bande de matériau défilante (11) au moyen du dispositif de coupe (24) ;
- pressage de l'extrémité de bande (19) de la bande de matériau défilante (11) au moyen du poinçon (23) sur la bande adhésive (22) et contre l'applicateur (21), et raccordement du nouveau début de bande (20) de la nouvelle bande de matériau (12) à la nouvelle extrémité de bande (19) de la bande de matériau défilante (11) ;
- transport de la nouvelle bande de matériau (12).

11. Procédé selon la revendication 10, avec un dispositif selon les revendications 8 ou 9, **caractérisé par** les étapes précédant le maintien de la nouvelle bande de matériau (12) par le dispositif de maintien :
- prise du début de bande (31) de la nouvelle bande de matériau (12) à partir d'une bobine (30) ;
- guidage de la nouvelle bande de matériau (12) à travers la deuxième section de guidage (14) ;
- transfert du début de bande (31) de la nouvelle bande de matériau (12) vers l'unité de précontrainte (28) et mise en tension de la nouvelle bande de matériau (12) dans la deuxième section de guidage (14).
